(19) Europäisches Patentamt
European Patent Office
Office européen des brevets

(11) **EP 1 411 227 B1**

(12) **EUROPÄISCHE PATENTSCHRIFT**

(45) Veröffentlichungstag und Bekanntmachung des Hinweises auf die Patenterteilung:
**09.04.2008 Patentblatt 2008/15**

(51) Int Cl.:
***F02D 21/08*** *(2006.01)*

(21) Anmeldenummer: **03010778.3**

(22) Anmeldetag: **14.05.2003**

(54) **Verfahren und Vorrichtung zur Ermittlung eines durch ein Stellelement eingestellten Massenstroms durch eine Massenstromleitung einer Brennkraftmaschine**

Method and device for detecting a set mass flow of a fluid through a conduit of an IC engine by means of an actuator

Méthode et dispositif pour détecter un débit massique preetabli d'un fluide a l'interieur d'un conduit d'un moteur à combustion interne par un actionneur

(84) Benannte Vertragsstaaten:
**DE FR IT SE**

(30) Priorität: **16.10.2002 DE 10248196**

(43) Veröffentlichungstag der Anmeldung:
**21.04.2004 Patentblatt 2004/17**

(73) Patentinhaber: **ROBERT BOSCH GMBH**
**70442 Stuttgart (DE)**

(72) Erfinder:
• **Wild, Ernst**
**71739 Oberriexingen (DE)**
• **Schlesiger, Oliver**
**71679 Asperg (DE)**
• **Reuschenbach, Lutz**
**70469 Stuttgart (DE)**
• **Koehler, Christian**
**74391 Erligheim (DE)**

(56) Entgegenhaltungen:
EP-A- 1 020 626    DE-A- 10 053 675
US-A- 5 601 068    US-A1- 2002 145 053

**Beschreibung**

Stand der Technik

Die Erfindung geht von einem Verfahren und von einer Vorrichtung zur Überwachung eines durch ein Stellelement eingestellten Massenstroms nach der Gattung der unabhängigen Ansprüche aus.

Aus der DE 100 53 675 A1 ist eine Brennkraftmaschine mit geregelter Abgasrückführung bekannt. Die Brennkraftmaschine umfasst einen Ansaugtrakt mit Frischluftkanal zur Frischluftzuführung, einen Abgasrückführkanal zur teilweisen Rückführung von Abgas in den Ansaugtrakt und einen Luftsammler. Hierbei bilden der Abgasrückführkanal und der Frischluftkanal je einen Einlasskanal zu einem 3-Wege-Ventil aus und ein Auslass des 3-Wege-Ventils ist mit dem Luftsammler verbunden, wobei das 3-Wege-Ventil derart ausgebildet ist, dass der Abgasrückführkanal und der Frischluftkanal wahlweise einen Zustand zwischen vollständig offen und vollständig geschlossen aufweisen. Die Stellung des 3-Wege-Ventils wird von einem Elektronikgerät geregelt, das über Temperatursensoren die jeweiligen Gastemperaturen im Frischluftkanal, im Abgasrückführkanal und im Mischkanal stromab vom Auslass des 3-Wege-Ventils bestimmt und daraus das Frischluft-Abgas-Verhältnis ermittelt, das schließlich mit dem Sollwert eines abgelegten Kennfeldes verglichen wird.

Aus der US 5,601,068 ist ein Verfahren und eine Vorrichtung zur Steuerung eines Dieselmotors bekannt. Dabei ist eine Abgasrückführleitung vorgesehen, um Abgas in einen Ansaugtrakt zurückzuführen. Ein Temperatursensor misst die Temperatur der rückgeführten Abgases. Ferner ist ein Abgasrückführventil vorgesehen. Ein Außenlufttemperatursensor ist im Ansaugtrakt vorgesehen. Eine Luftermittlungseinheit zur Berechnung der erforderlichen Luftmenge auf der Grundlage der von einem Kraftstoffsensor ermittelten Kraftstoffmenge und der vom Außenlufttemperatursensor ermittelten Außenlufttemperatur ist vorgesehen. Weiterhin ist eine Ermittlungseinheit zur Berechnung des rückgeführten Abgases vorgesehen, die Informationen von der Luftermittlungseinheit erhält und den erforderlichen Betrag des rückgeführten Abgases auf der Grundlage des Ausgangssignals des Temperatursensors für das rückgeführte Abgas und einem Motorzustandssensor ermittelt. Ferner ist eine Steuervorrichtung für die Abgasrückführung vorgesehen, die das Abgasrückführventil abhängig vom berechneten Betrag für das rückgeführte Abgas betätigt.

Aus der EP 1020626 A2 ist ein Abgasrückführungssystem für eine Brennkraftmaschine bekannt, bei dem ein Abgasrückführventil von einem Schrittmotor angetrieben wird. Das Abgasrückführventil steuert die Abgasrückführrate. Ferner ist ein elektronisches Steuergerät vorgesehen, das zur Bestimmung eines gewünschten Prozentsatzes für die Abgasrückführmassenstromrate abhängig von einer Motordrehzahl und einer Füllung des Motors vorgesehen ist. Dabei wird der Prozentsatz für die Abgasrückführmassenstromrate in eine Abgasrückführmassenstromrate umgewandelt, die Abgasrückführmassenstromrate wird abhängig von der Abgastemperatur und einem Abgasgegendruck korrigiert. Ferner wird ein Druckverhältnis über dem Abgasrückführventil ermittelt. Schließlich wird eine erforderliche Anzahl von Motorschritten abhängig von der gewünschten korrigierten Abgasrückführmassenstromrate und dem Druckverhältnis ermittelt, um den gewünschten Prozentsatz für die Abgasrückführmassenstromrate einzustellen. Es wird auch die aktuelle Abgasrückführmassenstromrate in Abhängigkeit der Abgastemperatur im Bereich des Abgasrückführventils bestimmt.

Wird bei einer Brennkraftmaschine aus dem Abgasstrang des Motors ein Abgasmassenstrom entnommen und über ein Abgasrückführventil in eine Abgasrückführleitung dem Motor dosiert zugeführt, so spricht man von Abgasrückführung.

Es lässt sich nicht vermeiden, dass bei einer Abgasrückführung Ablagerungen von Feststoffen aus dem Abgas- und dem Ansaugsystem das Abgasrückführventil und die Abgasrückführleitung im Laufe der Zeit beeinträchtigen können und deshalb die rückgeführte Abgasmenge mit zunehmender Laufzeit der Brennkraftmaschine abnimmt. Aus diesem Grund ist es erforderlich, die Funktion des Abgasrückführsystems der Brennkraftmaschine zu überwachen und Maßnahmen zu ergreifen, die solche fehlerhaften Veränderungen des Abgasmassenstroms kompensieren.

Zur Kompensation von fehlerhaften Veränderungen werden derzeit Konzepte eingesetzt, die auf folgendem Prinzip beruhen:

Es wird ein modellierter Partialdruck des rückgeführten Abgases aus einer Durchflusskennlinie des Abgasrückführventils abgeleitet und mit Hilfe eines unabhängigen Füllungssignals und eines berechneten internen Restgasdruckes wird ein Saugrohrdruck modelliert. Dieser modellierte Saugrohrdruck wird mit einem gemessenen Saugrohrdruck verglichen. Die auftretenden Differenzen werden in bestimmten Maßen als Fehler der Durchflusskennlinie des Abgasrückführventils interpretiert und gehen in Korrekturwerte für die Durchflusskennlinie des Abgasrückführventils ein. Die Art der Korrekturwerte richtet sich nach der Art des Fehlerbildes.

Ferner ist es nötig, den Abgasmassenstrom durch das Abgasrückführventil zu überwachen, wenn das Abgasrückführventil von der Steuerung der Abgasrückführung die Position "zu" einnehmen soll. Eine ungewollte Öffnung des Abgasrückführventils kann beispielsweise durch Ablagerungen im Dichtungsbereich des Abgasrückführventils oder durch mechanische Fehler entstehen, beispielsweise wenn eine Rückstellfeder des Abgasrückführventils gebrochen ist. Ferner kann eine Öffnung des Abgasrückführventils durch das vorherrschende Druckgefälle über dem Abgasrückführventil sowie durch Pulsationen im Saugrohr und/oder im Abgastrakt entstehen. Das Abgasrückführventil kann durch das anliegende Druckgefälle geöffnet werden, ohne dass dies die Steuerung vorsieht.

Eine solch ungewollte Öffnung des Abgasrückführventils kann bei Abgasrückführsystemen mit Lagerückmeldung erkannt werden. Nicht erkannt werden kann hingegen die Größe und Richtung des aus dieser Öffnung resultierenden Abgasmassenstroms. Bei Abgasrückführventilen ohne Lagerückmeldung ist sowohl die Öffnung des Abgasrückführventils als auch der daraus resultierende Abgasmassenstrom nicht bekannt.

Bei Brennkraftmaschinen mit einer Erhöhung des Gasdruckes vor der Drosselklappe, beispielsweise aufgrund eines Turboladers, und mit Abgasrückführung ist die Durchströmungsrichtung des Abgasrückführventils zu überwachen, damit sichergestellt ist, dass keine Frischluft über die Abgasrückführleitung in den Abgasstrang gelangen kann. Frischluft könnte dann über die Abgasrückführleitung in den Abgasstrang gelangen, wenn im Saugrohr im Vergleich zum Abgasstrang größere Gasdrücke herrschen und das Abgasrückführventil geöffnet ist.

Vorteile der Erfindung

Das erfindungsgemäße Verfahren und die erfindungsgemäße Vorrichtung mit den Merkmalen der unabhängigen Ansprüche haben demgegenüber den Vorteil, dass der Massenstrom in Abhängigkeit einer Abkühlung der Temperatur über der ersten Massenstromleitung und einer Temperatur am Stellelement ermittelt wird. Auf diese Weise lässt sich das beschriebene Konzept der Kompensation von fehlerhaften Veränderungen des Massenstroms verbessern und zusätzlich eine Möglichkeit schaffen, einen ungewollten Massenstrom durch das Stellelement zu erkennen. Dies lässt sich besonders einfach mit Hilfe eines zusätzlichen Temperatursensors am Stellelement realisieren. Über die Temperaturmessung am Stellelement und die Abkühlung der Temperatur über der ersten Massenstromleitung kann besonders einfach auf die Größe des Massenstromes geschlossen werden. Der wesentliche Vorteil der Erfindung liegt in der Möglichkeit, einen insbesondere ungewollten Massenstrom durch das Stellelement in seiner Größe zu detektieren. Durch den Einsatz des Temperatursensors wird die bei ungewollten Öffnungen des Stellelementes bisher nicht beobachtbare Größe des Massenstroms durch die erste Massenstromleitung nachbildbar.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn der Massenstrom in Abhängigkeit eines Quotienten aus einer Differenz zwischen der Temperatur am Stellelement und einer Temperatur an einem ersten Ende der ersten Massenstromleitung und einer Differenz einer Temperatur an einem zweiten Ende und der Temperatur am ersten Ende der ersten Massenstromleitung ermittelt wird. Auf diese Weise lässt sich der Massenstrom nur mit Hilfe von Temperaturen beschreiben. Weitere Betriebskenngrößen der Brennkraftmaschine zur Ermittlung des Massenstroms durch die erste Massenstromleitung sind daher nicht erforderlich.

Zeichnung

Ein Ausführungsbeispiel der Erfindung ist in der Zeichnung dargestellt und in der nachfolgenden Beschreibung näher erläutert. Es zeigen

Figur 1 ein Blockschaltbild einer Brennkraftmaschine und

Figur 2 ein Funktionsdiagramm zur Erläuterung des erfindungsgemäßen Verfahrens und der erfindungsgemäßen Vorrichtung.

Beschreibung des Ausführungsbeispiels

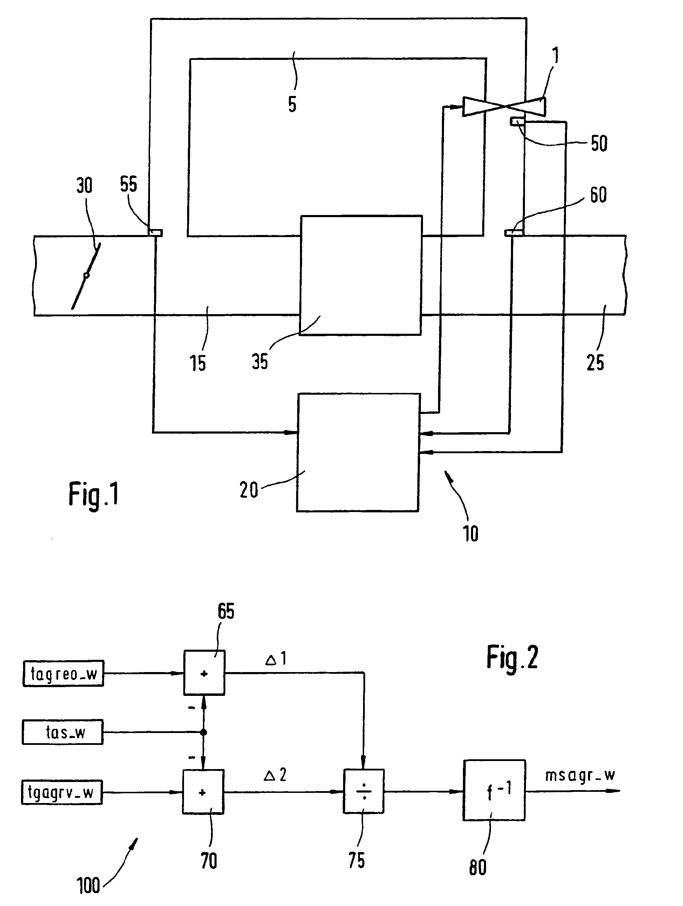

In Figur 1 kennzeichnet 10 eine Brennkraftmaschine mit einem Verbrennungsmotor 35, beispielsweise einem Ottomotor oder einem Dieselmotor. Dem Verbrennungsmotor 35 ist über ein Saugrohr 15 ein Gasgemisch zur Verbrennung in den Zylindern des Verbrennungsmotors 35 zugeführt. Das Gasgemisch im Saugrohr 15 setzt sich dabei zusammen aus einem über eine Drosselklappe 30 zugeführten Frischluftanteil und einem über einen Abgasrückführkanal 5 zugeführten Abgasmassenstrom. Der Abgasrückführkanal 5 verbindet dabei einen Abgasstrang 25 des Verbrennungsmotors 35 mit dem Saugrohr 15 zur Rückführung von Abgas. Der Abgasmassenstrom wird in seiner Größe durch ein Abgasrückführventil 1 als Stellglied eingestellt, wobei die Stellung des Abgasrückführventils 1, bzw. dessen Öffnungsgrad von einer Motorsteuerung 20 angesteuert wird. Im Abgasrückführkanal 5 befindet sich im Bereich des Abgasrückführventils 1 ein erster Temperatursensor 50, der die Temperatur am Abgasrückführventil 1 misst und den Messwert der Motorsteuerung 20 zuführt. Ferner befindet sich ein zweiter Temperatursensor 55 im Bereich der Einmündung des Abgasrückführkanals 5 in das Saugrohr 15 und misst die dort vorherrschende Temperatur am saugrohrseitigen Ende des Abgasrückführkanals 5 und gibt den Messwert an die Motorsteuerung 20 ab. Weiterhin ist ein dritter Temperatursensor 60 an der Abzweigung des Abgasrückführkanals 5 vom Abgasstrang 25 vorgesehen und misst die Temperatur am abgasstrangseitigen Ende des Abgasrückführkanals 5 und gibt den Messwert an die Motorsteuerung 20 weiter.

Der Abgasrückführkanal 5 stellt eine erste Massenstromleitung dar und das Saugrohr 15 eine zweite Massenstromleitung.

In Figur 2 ist anhand eines Funktionsdiagramms der Aufbau der erfindungsgemäßen Vorrichtung 100 und der Ablauf des erfindungsgemäßen Verfahrens beschrieben, wobei die erfindungsgemäße Vorrichtung 100 in der Motorsteuerung 20 hardware- und/oder softwaremäßig implementiert sein kann.

Der erste Temperatursensor 50 misst die Temperatur tgagrv_w am Stellelement, dem Abgasrückführventil 1, und führt sie einem zweiten Summationsglied 70 der Vorrichtung 100 zu. Der dritte Temperatursensor 60 misst die Temperatur tagreo_w am abgasstrangseitigen Ende des Abgasrückführkanals 5 und führt sie einem ersten Summationsglied 65 der Vorrichtung 100 zu. Der zweite Temperatursensor 55 misst die Temperatur tas_w am saugrohrseitigen Ende des Abgasrückführkanals 5 und führt sie mit negativen Vorzeichen sowohl dem ersten Summationsglied 65 als auch dem zweiten Summationsglied 70 der Vorrichtung 100 zu. Somit wird am ersten Summationsglied 65 eine erste Differenz $\Delta 1$ = tagreo_w - trs_w und am zweiten Summationsglied 70 eine zweite Differenz $\Delta 2$ = tgagrv_w - trs_w gebildet. In einem Divisionsglied 75 wird die erste Differenz $\Delta 1$ durch die zweite Differenz $\Delta 2$ dividiert. Das Ergebnis wird einer inversen Funktion f[1] zugeführt, die aus dem vom Divisionsglied 75 gebildeten Quotienten einen zugehörigen Abgasmassenstrom msagr_w bildet bzw. modelliert.

Durch das Funktionsdiagramm der Figur 2 wird der Abgasrückführmassenstrom msagr_w mit Hilfe der vom ersten Temperatursensor 50 am Abgasrückführventil 1 ermittelten Temperatur sowie einer Modellierung des Abgasrückführkanals 5 von seinem abgasstrangseitigen Ende bis zu seinem saugrohrseitigen Ende ermittelt. Hierzu verwendet man die Abkühlung des Abgasmassenstroms vom abgasstrangseitigen Ende des Abgasrückführkanals bis zum saugrohrseitigen Ende des Abgasrückführkanals 5 einerseits und vom abgasstrangseitigen Ende des Abgasrückführkanals 5 bis zum Abgasrückführventil 1 andererseits. Die Abkühlung kann folgendermaßen modelliert werden:

$$(tagreo\_w - tas\_w) \cdot f(msagr\_w) + tas\_w = tgagrv\_w \qquad (1).$$

Dabei ist $f$ (msagr_w) eine invertierbare Funktion des Abgasmassenstroms msagr_w, die in Abhängigkeit des Abgasmassenstroms msagr_w einen Faktor ergibt, der multipliziert mit der Temperaturdifferenz über die im wesentlichen gesamte Länge des Abgasrückführkanals 5 die Temperaturdifferenz zwischen der Temperatur tas_w am saugrohrseitigen Ende des Abgasrückführkanals 5 und der Temperatur tgagrv_w am Abgasrückführventil 1 ergibt. Die Funktion $f$ (msagr_w) kann dabei auf einem Motorenprüfstand für verschiedene durch das Abgasrückführventil 1 einstellbare Abgasmassenströme msagr_w mit Hilfe der drei Temperatursensoren 50, 55, 60 und einer für die Applikation der Funktion $f$ im Abgasrückführkanal 5 eingesetzten Massenstrommessvorrichtung zur Messung des Abgasmassenstroms msagr_w ermittelt werden. Die invertierte Funktion f[1] wird dann im Funktionsdiagramm gemäß Figur 2 mit dem Bezugszeichen 80 gekennzeichnet zur Ermittlung des Abgasmassenstroms msagr_w allein aus den von den Temperatursensoren 50, 55, 60 gemessenen Temperaturen verwendet.

Das Funktionsdiagramm nach Figur 2 realisiert die nach dem Abgasmassenstrom msagr_w aufgelöste Gleichung (1). Dabei kann auch die invertierte Funktion f[1] durch Auflösung der Gleichung (1) nach dem Abgasmassenstrom msagr_w in der beschriebenen Weise aus dem gemessenen Abgasmassenstrom msagr_w und den von den Temperatursensoren 50, 55, 60 gemessenen Temperaturen ermittelt werden.

Die Erfindung wurde am Beispiel des Abgasmassenstroms im Abgasrückführkanal 5 beschrieben, lässt sich aber auf beliebige Massenströme in einer beliebigen Massenstromleitung anwenden, insbesondere einer ersten Massenstromleitung, die in eine zweite Massenstromleitung mündet. Im zuvor beschriebenen Beispiel ist die erste Massenstromleitung der Abgasrückführkanal 5 und die zweite Massenstromleitung das Saugrohr 15. Das erfindungsgemäße Verfahren und die erfindungsgemäße Vorrichtung lassen sich aber auch für eine einzige Massenstromleitung unabhängig von einer oder mehreren weiteren Massenstromleitungen realisieren, da es nur auf die Temperatur am Stellelement dieser Massenstromleitung sowie den Temperaturabfall über dieser Massenstromleitung bzw. den Temperaturabfall zwischen einem Ende dieser Massenstromleitung und dem Stellelement ankommt.

**Patentansprüche**

1. Verfahren zur Ermittlung eines durch ein Stellelement (1) eingestellten Massenstroms durch eine erste Massenstromleitung (5) einer Brennkraftmaschine (10), **dadurch gekennzeichnet, dass** der Massenstrom in Abhängigkeit einer Abkühlung der Temperatur über der ersten Massenstromleitung (5) und einer Temperatur am Stellelement (1) ermittelt wird.

**2.** Verfahren nach Anspruch 1, **dadurch gekennzeichnet, dass** der Massenstrom in Abhängigkeit eines Quotienten aus einer Differenz zwischen der Temperatur am Stellelement (1) und einer Temperatur an einem ersten Ende der ersten Massenstromleitung (5) und einer Differenz einer Temperatur an einem zweiten Ende und der Temperatur am ersten Ende der ersten Massenstromleitung (5) ermittelt wird.

**3.** Verfahren nach Anspruch 2, **dadurch gekennzeichnet, dass** der Massenstrom als invertierbare Funktion des Quotienten appliziert wird.

**4.** Vorrichtung zur Ermittlung eines durch ein Stellelement (1) eingestellten Massenstroms durch eine erste Massenstromleitung (5) einer Brennkraftmaschine (10), **dadurch gekennzeichnet, dass** Mittel (100) zur Ermittlung des Massenstroms in Abhängigkeit einer Abkühlung der Temperatur über der ersten Massenstromleitung (5) und einer Temperatur am Stellelement (1) vorgesehen sind.

## Claims

**1.** Method for determining a mass flow, set by means of an actuating element (1), through a first mass flow line (5) of an internal combustion engine (10), **characterized in that** the mass flow is determined as a function of a cooling of the temperature across the first mass flow line (5) and a temperature at the actuating element (1).

**2.** Method according to Claim 1, **characterized in that** the mass flow is determined as a function of a quotient of a difference between the temperature at the actuating element (1) and a temperature at a first end of the first mass flow line (5) and a difference of a temperature at the second end and the temperature at the first end of the mass flow line (5).

**3.** Method according to Claim 2, **characterized in that** the mass flow is applied as an invertible function of the quotient.

**4.** Device for determining a mass flow, set by means of an actuating element (1), through a first mass flow line (5) of an internal combustion engine (10), **characterized in that** means (100) for determining the mass flow as a function of a cooling of the temperature across the first mass flow line (5) and a temperature at the actuating element (1) are provided.

## Revendications

**1.** Procédé pour déterminer un débit massique réglé par un élément de réglage (1) dans une première conduite de débit massique (5) d'un moteur à combustion interne (10),
**caractérisé en ce qu'**
on détermine le débit massique en fonction du refroidissement de la température dans la première conduite de débit massique (5) et d'une température de l'élément de réglage (1).

**2.** Procédé selon la revendication 1,
**caractérisé en ce qu'**
on détermine le débit massique en fonction du quotient de la différence entre la température sur l'élément de réglage (1) et la température à une première extrémité de la première conduite de débit massique (5) et de la différence de la température à la seconde extrémité et de la température à la première extrémité de la première conduite de débit massique (5).

**3.** Procédé selon la revendication 2,
**caractérisé en ce qu'**
on obtient le débit massique par application comme fonction inversée des quotients.

**4.** Dispositif pour déterminer un débit massique réglé par un élément de réglage (1) dans une première conduite de débit massique (5) d'un moteur à combustion interne (10),
**caractérisé par**

des moyens (100) pour déterminer le débit massique en fonction du refroidissement de la température dans la première conduite de débit massique (5) et de la température sur l'élément d'actionnement (1).

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10053675 A1
- US 5601068 A

- EP 1020626 A2